# EUROPÄISCHE PATENTANMELDUNG

(11) **EP 2 609 988 A1**
(43) Veröffentlichungstag der Anmeldung: **03.07.2013**
(21) Anmeldenummer: 11196103.3
(22) Anmeldetag: 29.12.2011
(51) Int. Cl.: B01D 53/96

(54) **Niedertemperaturverfahren zur Desorption beladener aminhaltiger Waschflüssigkeiten aus Gaswaschprozessen und Vorrichtung**

(71) Anmelder: Dreyer & Bosse Kraftwerke GmbH, 29475 Gorleben (DE); Leibniz-Institut für Katalyse e.V. an der Universität Rostock, 18059 Rostock (DE)
(72) Erfinder: Boback, Ralf, D-13088 Berlin (DE)
(74) Vertreter: Gulde Hengelhaupt Ziebig & Schneider

(57) **Zusammenfassung**

Die Erfindung betrifft ein Niedertemperaturverfahren zur Desorption aminhaltiger Waschflüssigkeiten aus Gaswaschprozessen, worin die beladene Aminwaschflüssigkeit in einer Verdichtungszone auf 2-16 bar verdichtet wird, anschließend in einer Heiz- und Nukleationszone auf eine Temperatur von 40°C - 105°C erwärmt wird und zur Bildung von Nukleationskeimen angeregt wird, danach die erwärmte Aminwaschflüssigkeit in einer Entspannungszone auf einen Druck von 0,1 - 3 bar entspannt wird und die verbliebene Aminwaschflüssigkeit in einer Absetzzone bei einer Temperatur von 60°C bis unterhalb ihres druckabhängigen Siedepunktes für eine mittlere Verweilzeit der Aminwaschflüssigkeit von 2 bis 180 Minuten gehalten wird, und schließlich die Aminwaschflüssigkeit aus der Absetzzone nach dem Abziehen eines desorbierten Teiles der Aminwaschflüssigkeit wieder der Verdichtungszone im Umlauf zugeführt wird. Das Verfahren arbeitet mit niedrigen Prozeßtemperaturen, wodurch die Alterung der Waschflüssigkeit vermindert wird, Wärmequellen mit niedrigem Wärmeniveau eingesetzt und anlagentechnische Anforderungen abgesenkt werden können. Die Erfindung betrifft auch eine Vorrichtung zur Verfahrensdurchführung.

## Beschreibung

Die Erfindung betrifft ein Niedertemperaturverfahren zur Desorption und Regeneration beladener aminhaltiger Waschflüssigkeiten aus Gaswaschprozessen, in der Sauergase wie CO₂ und/oder Schwefelverbindungen chemisch gebunden vorliegen sowie eine Vorrichtung zur Durchführung des Verfahrens. Als Sauergase werden Gase bezeichnet, die Schwefelverbindungen und CO₂ enthalten.

Verschiedene Gase wie Biogase, Abgase aus chemischen Prozessen oder Erd- und Erdölbegleitgase enthalten Sauergase, die vor einer weiteren Verwendung oder sicheren Ableitung in die Atmosphäre abgetrennt werden müssen. Hierzu kommen unter anderem chemische und physikalische Gaswaschverfahren in Frage, wobei eine chemische Wäsche vorzugsweise mittels einer aminhaltigen Waschmittellösung erfolgt, in der CO₂ und Schwefelverbindungen chemisch gebunden werden.

Aus DE 203 00 663 U1 ist eine Biogasaufbereitungsanlage bekannt, die durch physikalische Lösung unter Druck u. a. CO₂ im Waschmittel bindet. Die Regeneration erfolgt unter Durchführung eines ersten Entspannungsschritts, einer Erwärmung des Waschmittels mit nachfolgender zweiter Entspannung und einer abschließenden Strippung mit Umgebungsluft. Die Strippung mit Luft ist ein für Anlagen zur physikalischen Adsorption von CO₂ und/oder Schwefelverbindungen bekanntes Verfahren, es eignet sich für oxidationsstabile Waschflüssigkeiten. Aminhaltige Waschmittellösungen zeichnen sich jedoch durch eine geringe Oxidationsstabilität aus, zudem wird bei der Luft-Strippung in die Waschflüssigkeit eingetragener gelöster Stickstoff und Sauerstoff in das Produktgas eingeschleppt.

Die DE 10 2008 039 171 A1 beschreibt eine ultraschallgestützte Regeneration von Waschflüssigkeiten aus Rauch- und Abgaswäschen fossil gefeuerter Kraftwerke. Wesentliches Merkmal ist die direkte Entlösung von physikalisch gelöstem CO₂. Als Hauptenergiequelle findet ein Ultraschalleintrag Anwendung, wobei die Waschflüssigkeit über den gesamten Desorptionszyklus bei geringerem Druck als in der Adsorption herrschend desorbiert wird. Die angegebene erweiterte Ausführungsform unter Einschluß von MEA bzw. Gemischen von MEA mit tertiären Aminen besitzt den Nachteil, das angesichts der vorgeschlagen Oxidation des Waschmittels zur verbesserten SO₂-Behandlung und angesichts der bekannt beschränkten Oxidationsstabilität basischer Aminwaschmittel sowie der vorgeschlagenen Einstellung niedriger pH-Werte von 2 - 6,5 in der beladenen Rich-Lösung nur kurze Waschmittelstandzeiten erwartet werden können.

Die klassische Desorption aminhaltiger Waschmittellösungen durch Wasserdampfstrippung ist von Kohl und Nielsen in "Gas Processing", 5. Ed., (Gulf Publishing Corporation 1997) im Detail beschrieben worden. Nachteil ist der hohe Energieaufwand zur Erzeugung des Dampfstroms. Ferner können bereits moderate Temperaturen von 115 - 130 °C zur Standzeitverkürzung der Waschmittellösungen beitragen. Bekannt ist weiterhin die Temperaturabhängigkeit einer effektiven Desorption, für Monoethanolamin (MEA) sind etwa 116°C anzustreben (vgl. DE 00000 2410737A1), während für 2-(2Aminoethoxy)ethanol (Diglycolamin, DGA) mindestens 105 °C für eine effektive Wasserdampfstrippung erforderlich sind.

Die US 5,861,051 beschreibt den reclaimerfreien Einsatz eines DGA / N,N-Diethanolmethylamin (MDEA) Gemischs für Erdgas zur Entfernung von CO₂ im Bereich von 0,01% - 10% Sauergasanteil für ein Waschmittel mit 25 Gew.% - 50 Gew.% MDEA und 3 Gew.% - 15 Gew.% DGA bei Absorbertemperaturen von 60 - 80°C. Reclaimerfrei bedeutet, daß keine Bildung von Bis-(2-hydroxyethoxy-ethyl)harnstoff (BHEEU) auftritt und auf die thermische BHEUU-Regeneration verzichtet werden kann.

Aus PCT WO 03/031028 ist ein Apparat zur Strippung einer aminhaltigen Waschflüssigkeit mit Luft bekannt. Dazu wird die Waschflüssigkeit im Bereich von 90-130°C erwärmt und in einer Schüttungskolonne mit leicht komprimierter Umgebungsluft gestrippt. Einsatzzweck ist die Konditionierung von Brennluft für Brennstoffzellen und speziell die Entfernung von CO₂ aus der Luft. Die vorgeschlagene Anordnung besitzt jedoch den erwähnten erheblichen Nachteil, daß die Strippung mit Luft erfolgt und die Waschflüssigkeit einer oxidativen Belastung unterwirft, die zur Verkürzung ihrer Standzeit und Lebensdauer führt.

Curnow et al. beschreiben in Ind. Eng. Chem. Res. 2005, 44, 1085-1089 die Strippung von CO₂ aus einer wäßrigen aminhaltigen MEA - Glykollösung mit Stickstoff. Das desorbierte CO₂ wird zusammen mit dem Stripgas an die Umgebung abgegeben. Möglich ist auch eine Verwendung von Helium und Argon. Nachteilig für Anwendungen außerhalb kleiner Laborapplikationen ist der hohe Aufwand zur Bereitstellung des Stripgases.

US 7,718,15 B1 lehrt die Kombination einer physikalischen Gaswäsche mit einer chemischen Gaswäsche mit einem Waschmittelgemisch und beschreibt die Schwerkrafttrennung beider Waschmittelkomponenten. Die Lösung birgt jedoch einige Nachteile, etwa ein mögliches Ausschleppen des physikalisch wirksamen Waschmittels mit dem Produktgasstrom. Es liegen zudem relativ ungünstige Temperaturverhältnisse vor, eine effektive physikalische Adsorption benötigt für hohe Adsorptionsmengen meist kalte Waschlösungen von unter +20 °C, während chemische Wäschen für praxisrelevante Reaktionsgeschwindigkeiten in der Absorption jedoch höhere Temperaturen ab +40 bis 50 °C benötigen. Zudem trägt die physikalisch wirksame Waschmittelkomponente durch die sich in ihr physikalisch lösenden Kohlenwasserstoffen dazu bei, unerwünscht Produktgasanteile wie z. B. Methan aus dem Feedgas in den Offgasstrom mitzuschleppen.

DE 10 2007 048 565 B3 beschreibt eine mehrstufige Flashanordnung zur Regeneration beladener aminhaltiger Waschmittel, wobei eine Mindesttemperatur von 110 °C und 4 bar in einer ersten Stufe sowie 130 °C und 4 bar in einer zweiten Stufen angegeben werden und die Waschlösung in einer dritten Stufe bei 70 °C wieder auf Normaldruck entspannt wird. Ein besonderer Nachteil der Lösung ist die hohe Desorptionstemperatur, die Wärmequellen auf hohem Temperaturniveau voraussetzt und der hohe Aufwand einer mehrstufig ausgeführten Anordnung. Das gewählte Waschmittel und dessen thermisch miterzeugten Zerfallsprodukte erzwingen den Einsatz von Schauminhibitoren.

In jüngster Zeit wurden auch modifizierte Aminwaschmittelgemische auf Basis lipophiler Alkylamine vorgeschlagen, die bei Erwärmung eine temperaturabhängige ausgeprägte Phasentrennung aufweisen, die aber bislang den Nachteil sehr hoher Verdampfungsverluste toxikologisch problematischer Amintypen besitzen.

Eine weitere Anwendung eines zweiphasigen Entmischungseffekts ist in der US 2009/0199709 A1 beschrieben. Bei Überschreiten einer spezifischen Temperatur im Bereich von 60 - 100 °C neigen einige wäßrige Aminsysteme zur Entmischung, die durch den Zusatz weiterer organischer Flüssigkeiten wie u. a. Ketonen, Alkoholen oder den Zusatz von Salzen wie u. a. Alkalisalzen, Aminsalzen, Aminosäuren gefördert werden kann. Für mit CO₂ beladene wäßrige Lösungen von N-Propyl-1-propanamin und N,N,N',N'-Tetrametylbutandiamin wird eine Phasentrennung bei 80 °C bzw. bei 60 °C beschrieben. Die US 2010/0132551 konzentriert sich auf die Anwendung des o. g. Effekts für eine Desorberkolonne. Nachteilig ist jedoch, daß die Desorption nach wie vor auf hohem Temperaturniveau erfolgen muß und eine Aufkonzentrierung des Waschmittels gerade im heißesten Anlagenbereich - dem Desorbersumpf - die Bildung korrosiver Degradationsprodukte fördert und dort eine erhöhte Korrosionsgefahr mit sich bringt.

Der Erfindung liegt die Aufgabe zugrunde, ein Verfahren zur Desorption einer bei der Reinigung von Gasen anfallenden Aminwaschflüssigkeit, in der CO₂ und/oder Schwefelverbindungen chemisch gebunden sind, bereitzustellen, um auf einem Temperaturniveau unterhalb des Siedepunktes der Aminwaschflüssigkeit bei erhöhten Drücken eine weitgehende Desorption der beladenen Aminwaschflüssigkeit zu ermöglichen.

Eine weitere Aufgabe besteht darin, die thermische Belastung der Aminwaschflüssigkeit deutlich zu vermindern, um dadurch deren Standzeit zu erhöhen und damit die Alterung wesentlich zu verzögern.

Eine weitere Aufgabe der Erfindung ist es, die bei niedrigeren Desorptionstemperaturen von Aminwaschflüssigkeiten noch langsame Regenerationsgeschwindigkeit in geeigneter Weise zu kompensieren.

Eine weitere Aufgabe besteht in einer effektiven und energiegünstigen Regeneration der Waschflüssigkeit.

Erfindungsgemäß ist das Verfahren zur Desorption beladener aminhaltiger Waschflüssigkeiten aus Gaswaschprozessen von Gasen, worin CO₂ und/oder Schwefelverbindungen chemisch gebunden vorliegen, dadurch gekennzeichnet, daß
a) die beladene Aminwaschflüssigkeit in einer Verdichtungszone auf 2-16 bar verdichtet wird,
b) die beladene Aminwaschflüssigkeit in einer Heiz- und Nukleationszone auf eine Temperatur im Bereich von 40 °C bis 105 °C erwärmt wird,
c) die unter Druck stehende, erwärmte Waschflüssigkeit zur weiteren Bildung von Nukleationskeimen angeregt wird,
d) die erwärmte, Nukleationskeime enthaltende Waschflüssigkeit in einer Flash- oder Entspannungszone auf einen Druck von 0,1 - 3 bar (absolut) entspannt wird, so daß sich ein Sprühnebel unter Bildung von Tröpfchen und Flüssigkeitspartikeln ausgebildet und die Waschflüssigkeit bereits durch die stark erhöhte Oberflächendiftusion graduell desorbiert wird. Bei Waschflüssigkeitstemperaturen über 100 °C und Drücke gleich/größer Atmosphärendruck bzw. bei Waschflüssigkeitstemperaturen und Drücken unterhalb des Atmosphärendrucks gerät die entspannte Waschflüssigkeit temporär in einen überhitzen Zustand. Unter Verdampfung von Waschflüssigkeitsanteilen wird die Waschflüssigkeit dadurch zusätzlich gestrippt wobei das abdiffundierte bzw. zusätzlich abgestrippte CO₂ oder gasförmige Schwefelverbindungen zusammen mit nicht kondensierten gasförmigen Waschflüssigkeitsbestandteilen als Offgas abgezogen wird,
e) die verbliebene Waschmittelflüssigkeit in einer Verweil- und Absetzzone bei einer Temperatur von 60 °C bis unterhalb ihres druckabhängigen Siedepunktes für eine mittlere Verweilzeit der Waschflüssigkeit von 2 bis 180 Minuten gehalten wird, wobei die Waschflüssigkeit in der Verweil- und Absetzzone einer Ausgasung unterliegt;
f) die Waschflüssigkeit aus der Verweil- und Absetzzone nach dem Abziehen eines Teiles der Waschflüssigkeit wieder der Verdichtungszone im Umlauf zugeführt wird. Der Druck in der Verdichtungszone liegt vorteilhaft bei 2 - 10 bar, insbesondere 3 - 8 bar.

Das Abziehen der behandelten und teildesorbierten Waschflüssigkeit kann nach verschiedenen Gesichtspunkten erfolgen. Nach einer Ausführungsform des Verfahrens kann ein beliebiger prozentualer Anteil aus dem Kreislauf entfernt werden, z.B. ein Anteil von 20 bis 30 Gew.-% zur Bedienung des Waschflüssigkeifisbedarfs folgender Prozeßstufen. Nach einer weiteren Ausführungsform kann der Füllstand in der Verweil- und Absetzzone konstant gehalten werden. Nach einer weiteren Ausführungsform kann soviel Waschflüssigkeit abgezogen werden, daß deren mittlere Verweilzeit in der Verweil- und Absetzzone konstant bleibt.

Nach einer weiteren Ausführungsform des Verfahrens kann die Waschflüssigkeit aus der Verweil- und Absetzzone als teildesorbierte Lean-Flüssigkeit mit einem geringeren Beladungsgrad als in der zulaufenden Rich-Waschflüssigkeit vorliegend aus dem oberen Bereich der Verweil- und Absetzzone zur weiteren Verwendung dem Kreislauf entzogen (ausgekreist) werden.

Bei der Ausführungsform des Verfahrens für eine Phasentrennung und Entschichtung zeigende Waschflüssigkeit wird die verstärkt chemische Reaktionsprodukte der CO₂-Bindung enthaltende Waschflüssigkeitsfraktion mit höherem Beladungsgrad durch Dekantierung oder Zentrifugation separiert und erneut der Verdichtungszone zugeführt.

Bei dieser Ausführungsform des Verfahrens für eine Phasentrennung und Entschichtung zeigende Waschflüssigkeit erfolgt die Auskreisung der desorbierten Waschflüssigkeitskomponente unter Zumischung der stärker wasserhaltigen Komponente derart, daß das ausgekreiste Mischprodukt den gleichen Wasseranteil wie die zulaufende zu desorbierende Waschflüssigkeit aufweist.

Unter dem Begriff "Rich-Waschflüssigkeit" wird die aus einer Absorptionskolonne abgezogene, mit CO₂ und Schwefelverbindungen beladene Amin-Waschflüssigkeit verstanden. "Lean-Waschflüssigkeit" ist die von CO₂ und Schwefelverbindungen zum großen Teil befreite Waschflüssigkeit. "Semi-Lean-Waschflüssigkeit" ist die wenigstens teilweise von CO₂ und Schwefelverbindungen befreite Waschflüssigkeit, die einer erneuten Absorption zugeführt werden soll. "Semi-Rich-Waschffüssigkeit" ist eine bereits teilweise mit CO₂ und Schwefelverbindungen beladene Waschflüssigkeit, die einer weiteren Desorption unterzogen werden soll.

Für die Erfindung bevorzugte Wärmequellen für die Erwärmung der aminhaltigen Waschflüssigkeit in der Heizzone auf die Betriebstemperatur sind flüssige Wärmeträger oder Gase mit Abwärme aus Blockheizkraftwerken (BHKW), die typischerweise mit Temperaturen bis zu +98 °C verfügbar sind, oder solche von Wärmepumpen, aus Erdwärme- oder Solaranlagen oder aus Abwärme oder Prozeßwärme anderer industrieller Prozesse. Diese Wärmequellen können auch durch Wärmepumpen auf das Niveau der Desorptionstemperatur gebracht werden.

Eine besondere Ausführungsform der Erfindung ist daher dadurch gekennzeichnet, daß die Aminwaschflüssigkeit in der Heiz- und Nukleationszone auf eine Temperatur im Bereich von 40 bis 98°C erwärmt wird, insbesondere 60 bis 95°C, speziell 75 bis 95°C.

Für das vorliegende Verfahren besonders geeignete aminhaltige Waschflüssigkeiten sind solche, die bei der Wäsche von CO₂ aus Gasgemischen wie Bio-, Klär- und Grubengas genutzt werden und bei Normaltemperatur flüssig sind. Vorzugsweise sind das wäßrige Lösungen.

Derartige Waschflüssigkeiten reagieren chemisch mit CO₂, binden aber auch Schwefelverbindungen wie H₂S, Thiole, Mercaptane oder Gemische. Ferner können CO₂ und gasförmige Schwefelverbindungen in geringerem Umfang auch physikalisch gelöst vorliegen.

Eine bevorzugte Aminwaschflüssigkeit ist z. B. ein Gemisch aus MDEA und DGA, vorteilhaft im Verhältnis MDEA : DGA im Bereich von 1:8 bis 1:35, vorzugsweise 1:15 bis 1:23, insbesondere 1:18 bis 1:20. Bei einem solchen Gemisch konnte keine Bildung von unerwünschtem BHEEU [(Bis-(2-hydroxyethoxyethyl)harnstoff] festgestellt werden.

Weitere geeignete Aminwaschflüssigkeiten sind solche, die bei der Aminwäsche in anderen chemischen Prozessen anfallen, oder die aus der Wäsche von Erdgas oder Erdölbegleitgas herrühren.

Der erzielbare Desorptionsgrad liegt in Abhängigkeit von der effektiven Flashzeit und Flashintensität, der effektiven Oberflächenvergrößerung der geflashten Aminwaschflüssigkeit, der Art der wäßrigen Aminwaschflüssigkeit und deren Temperatur für Temperaturen um 90 - 95 °C bei über 20 % der chemischen CO₂-Absorptionskapazität einer hoch beladenen aminhaltigen Waschflüssigkeit, d.h. einer Aminwaschflüssigkeit, die mindestens 50 % ihrer bei gegebenem Partialdruck maximal möglichen Beladung mit CO₂ und/oder Schwefelverbindungen aufweist.

Besonders vorteilhaft dabei ist, daß die diffusionsunterstützte Desorption bereits bei geringen Temperaturen dicht über dem Gleichgewichtspunkt der Absorption von CO₂ zur Desorption von CO₂ erfolgen kann, da sich das Gleichgewicht in der Desorptionsreaktion zugunsten des gasförmig freigesetzten CO₂ verschiebt. Somit kann eine möglichst niedrige Desorptionstemperatur genutzt werden.

Bei einer temperatur- und beladungsabhängigen Desorptionszeit von 20 bis 80 Minuten erfährt die hoch beladene Aminwaschflüssigkeit eine CO₂-Entladung von 50 bis 60 % ihrer eintrittseitigen Ausgangsbeladung. Die erzielte Entladung läßt sich direkt anhand von Parametern für den Beladungsgrad der Aminwaschflüssigkeit wie pH-Wert, Dichte, Leitfähigkeit bestimmen und als Kriterium für das Erreichen der erforderlichen mittleren Verweilzeit der Aminwaschflüssigkeit in der Desorption heranziehen. Darüber hinaus ist auch die direkte spektrometrische bzw. titrimetrische Bestimmung des Waschmittel-Befadungsgrades möglich. Eine weitere Methode besteht in der direkten Bestimmung der ausgetragenen CO₂-Menge im Offgasstrom unter Nutzung der CO₂-Konzentration und des Offgas-Volumenstroms.

Die Desorption in der Flash- oder Entspannungszone erfolgt in zwei Modi:
a) ein immer aktiver, dafür langsamer Diffusionsmodus, der insbesondere auch dann wirksam ist, wenn die Bedingungen für die Ausbildung einer Entspannungsverdampfung von Waschflüssigkeitsbestandfieilen unmittelbar während bzw. nach der Düsenentspannung nicht gegeben sind.
   Ausschlaggebend ist die Oberflächenvergrößerung der als Partikel und Tröpfchen temporär vorliegenden Flüssigkeit um den Faktor 20 - 1000 gegenüber der Oberfläche der gleichen Flüssigkeitsmenge, wie z.B. innerhalb einer Rohrleitung vorliegend. Dabei liegt die Temperatur der Aminwaschflüssigkeit vorzugsweise bei 85 - 100 °C. Der Ausdüsedruck ist hierbei nur für Erzielung der erforderlichen Oberflächenvergrößerung relevant, d.h. für die reine Zerstäubung der Flüssigkeit.
b) Ein kombinierter Diffusions- und Strippmodus findet statt, wenn Waschflüssigkeitsbestandteile im Moment der Eindüsung überhitzt vorliegen, d.h. mit einen Druck in der Heiz- und Nukleationszone über dem Druck in der Flashzone bei Temperaturen > 100 °C. (vorzugsweise 2 - 10 bar, bei 100 - 105°C).
   oder
   bei Temperaturen der Aminwaschflüssigkeit unter 100 °C, wenn aus der Heiz-und Nukleationszone in eine Flashzone unter Unterdruck entspannt wird, bei 75 - 100 °C, bevorzugt im Temperaturbereich 85 - 100 °C. Der Druck in der
   Heiz- und Nukleationszone beträgt vorzugsweise 2-10 bar, der Druck innerhalb des Strippbereiches der Flashzone 0,99 - 0,4 bar (absolut).

Zusätzlich zur langsamen Diffusion wird die Aminwaschflüssigkeit durch die Verdampfung von Waschflüssigkeitsbestandteilen gestrippt. Entstehende Dampfanteile aus Waschflüssigkeitsbestandteilen bewirken eine zusätzliche Strippung der Aminwaschflüssigkeit, die die Desorption von CO₂ und gasförmigen Schwefelverbindungen verstärkt. Der Effekt der Entspannungsverdampfung kann durch nukleationsfördernde Maßnahmen verstärkt werden.

Dieser kombinierte Diffusions- und Strippmodus ist bevorzugt.

Weiterhin kann durch Zugabe von niedrigsiedenden Additiven die Entspannungsverdampfung verstärkt werden. Als niedrigsiedende Additive sind definiert organische in den Aminwaschflüssigkeiten lösliche Substanzen, die einen Siedepunkt zwischen 30 und 109 °C, bevorzugt 50 - 90 °C, besonders bevorzugt 60 bis 80 °C besitzen. Niedrigsiedende Additive können beispielsweise sein Alkohole, wie Methanol, Ethanol, 1-Propanol oder 2-Propanol, Ketone, wie Aceton, Methylethylketon, Ester, wie Essigsäureethylester, Essigsäuremethylester, Ameisensäuremethylester, Ameisensäureethylester, lineare oder cyclische Ether, wie Diethylether, Dipropylether, Tetrahydrofuran oder Tetrahydropyran oder aromatische Heterocyclen sein.

Die Verdichtung in der Verdichtungszone beim erfindungsgemäßen Verfahren beträgt vorzugsweise 2 bis 10 bar, bevorzugt 4 bis 10 bar.

Die Erwärmung in der Heiz- und Nukleationszone erfolgt vorzugsweise auf eine Temperatur von 50 bis 105 °C und noch vorteilhafter von 75 bis 105°C.

Die Oberfläche der Aminwaschflüssigkeit erhält eine intensive, temporäre Vergrößerung. Unter den Bedingungen des kombinierten Diffusions- und Strippmodus wird unmittelbar während und nach der Ausdüsung für einen oder mehrere Bestandteile der Aminwaschflüssigkeit gegenüber den Bedingungen in der Flash-und Absetzzone ein überhitzter Zustand erreicht, der zur Verdampfung von Waschflüssigkeitsbestandteilen führt.

Eine Nukleation in der Heiz- und Nukleationszone zur Steigerung der Verdampfungsrate von Bestandteilen der erwärmten Aminwaschflüssigkeit in der Flashzone und zur Senkung des Siedeverzugs der Aminwaschflüssigkeit kann durch verschiedene Maßnahmen unterstützt werden, z. B. durch die Erzeugung von Kavitationsblasen durch eine Ultraschallbehandlung bei 18 - 100 kHz, durch Oberflächenrauhigkeiten von Wänden oder Einbauten in dieser Zone im Bereich von 5 bis 100 µm.

Darüber hinaus können Nukleationskeime gut steuerbar durch eine feinblasige Zudosierung eines unter Druck stehenden Gases in die Heiz- und Nukleationszone eingefügt werden, insbesondere z.B. Wasserstoff, Stickstoff und Kohlendioxid. Feinblasig bedeutet eine Blasengröße unter 0,05 mm.

Eine weitere Möglichkeit besteht in der Zumischung einer physikalisch gelöste Gase enthaltenden Flüssigkeit, die unter höherem Druck steht als das zu desorbierende Waschmittel in der Heiz- und Nukleationszone, so daß bei Zumischung und Entspannung in die Nukleationszone eine Entgasung der nun übersättigten Lösung erfolgt und die entlösten Gasblasen als zusätzliche Nukleationskeime fungieren. Eine solche Flüssigkeit kann z. B. Kondensat- und aufbereitetes Frischwasser aus einer Gaswaschanlage sein, das z. B. mit Stickstoff, Wasserstoff oder CO₂ begast wurde. Eine vorteilhafte Ausprägung ist eine geringfügige Elektrolysebehandlung der zudosierten Flüssigkeit, wodurch Nukleationskeime in Form von gelöstem Wasserstoff bereitgestellt werden. Der dabei gebildete Sauerstoff wird zur Vermeidung einer zusätzlichen Aminoxidation vorteilhafterweise aus dem System abgeleitet und so von der Aminwaschflüssigkeit ferngehalten, z.B. durch ein Diaphragma.

Eine weitere Möglichkeit der Erzeugung von Nukleationskeimen besteht im Einsatz einer lokalen vorzugsweise schnell gepulsten Wärmequelle zur kurzzeitigen Verdampfung eines kleinen Teiles, z. B. von <0,1% der Waschflüssigkeit im Bereich von 1 µs bis 50 ms.

Eine weitere Möglichkeit der Erzeugung von Nukleationskeimen besteht darin, in der Heiz- und Nukleationszone Oberflächenrauhigkeiten oder Rauh-Beschichtungen von 5 - 100 µm im Innenraum dieser Zone zu gewährleisten.

Die Entspannung der unter Druck stehenden Aminwaschflüssigkeit erfolgt vorteilhaft über eine Düse oder ein Düsensystem, wobei die Aminwaschflüssigkeit beim Düsenaustritt und Übergang in die Flashzone einer temporären Oberflächenvergrößerung unterliegt, die zu einer Abreicherung an der Oberfläche von CO₂ und/oder von schwefelhaltigen Gasbestandteilen und deren Nachdiffusion führt und im Fall des Betriebs unter Bedingungen einer Entspannungsverdampfung auch einen zusätzlichen Strippgasstrom für die Desorption des beladenen Aminanteils durch Verdampfung von Waschflüssigkeitskomponenten lokal erzeugt. Es können eine oder mehrere Düsen eingesetzt werden.

Die Entspannung in der Flashzone erfolgt unter Tröpfchenbildung und liegt vorteilhaft in einem Bereich, ausgehend von einem leichten Vakuum von etwa 0,1 bar über Umgebungsdruck von etwa 1 bar bis zu vorteilhaften Drücken von etwa 2 bar für Folgeprozesse. Der Druck kann auch stufenweise reduziert werden. Ein bevorzugter Bereich für die Entspannung der Waschflüssigkeit liegt bei 0,5 bis 2 bar Überdruck innerhalb der Flashzone.

Die Entspannungsverdampfung kann auch in einen Vakuumbehälter hinein erfolgen, was allerdings zusätzlichen Aufwand bedeutet.

Die Düse kann nach dem Einmedium-, gasunterstützen- und dem Ultraschallzerstäubungsprinzip ausgeführt sein. Durch Wahl des Eindüsungssystems kann die Größe der erzeugten Flüssigkeitströpfchen beeinflußt werden. Die Tröpfchengröße unterliegt einer u. a. von der Entfernung vom Düsenausgang abhängigen Verteilungsfunktion und liegt als mittlere Tröpfchengröße im Bereich 10 - 1000 µm, vorzugsweise im Bereich von 10 - 500 µm, insbesondere 10 bis 100 µm.

Der Gasraum wird vorzugsweise ausreichend groß gewählt, so daß eine Verweilzeit der Tröpfchen im Gasraum von 0,1 - 10 s erreicht wird. Weiterhin sollte der Gasraum so groß gewählt werden, daß die Flüssigkeitströpfen vor dem Erreichen der Oberfläche der Flüssigkeit des geflashten Waschmittels den thermodynamischen Gleichgewichtszustand wieder erreichen, d.h. mit beendeter Entspannungsverdampfung im bzw. am Tröpfchen.

Die Entspannungsverdampfung selbst verläuft vorteilhaft in räumlichen Zonen: einer "Atomisierungszone" von 10- bis 100-facher Länge des Düsenöffnungsdurchmessers, worin der Flüssigkeitsstrahl in Tröpfchen zerfällt. Es folgt eine "Verdampfungs-oder Sprayzone" mit konischer Expansion des Flüssigkeitsstrahls, wobei sich eine flüssig-gasförmige Mehrphasenströmung unter weiterer Verdampfung von Waschmittelbestandteilen aus den Tröpfchen ausbildet. Diese ist beendet, wenn die Tröpfchen im thermodynamischen Gleichgewicht ohne weitere Verdampfung von Waschflüssigkeitsbestandteilen nur noch flüssig vorliegen.

Die Düse(n) kann (können) sowohl direkt von oben auf die Flüssigkeit, als auch davon abweichend sprühen, um durch nach oben oder tangential erfolgende Eindüsung einen längere Verweilzeit der Tröpfchen in der Flashzone zu erzielen.

Flashzone und Absetzzone können vorteilhaft in einem Behälter integriert sein. Der Flashbehälter kann auch baulich vom Absetzbehälter getrennt sein.

Je nach Ausgestaltung der Flashzone und nach Art der Aminwaschflüssigkeit kann auch eine zwischen Offgasabzug und Flashzone angeordnete Koaleszenz- oder Schaumabtrennungszone vorteilhaft sein, in der Aerosole und Schäume der Waschmittelflüssigkeit von nichtkondensierenden Gasbestandteilen, insbesondere CO₂ und H₂S getrennt werden. Insgesamt vorteilhaft ist die Vermeidung von übermäßigem Schäumen in der Flashzone.

Die Flüssigkeits-Gas-Trennung in einer optionalen Koaleszenz- und Schaumabscheidezone erfolgt vorzugsweise durch mechanisch wirkende Abscheideelemente wie Lochbleche, Siebe, Koaleszenzabscheider, Filterelemente, Schaumdome u. ä.

Abgetrennte flüssige Bestandteile werden in die Aminwaschflüssigkeit zurückgeführt, oder aber als schaumbildende Waschflüssigkeitsbestandteile z.B. durch Abskimmen von Schaum aus dem Waschflüssigkeitskreislauf ausgekreist.

Zur Schaumniederschlagung möglich ist auch die Nutzung von Sprühelementen zur Einsprühen von Aminwaschflüssigkeit oder Wasser. Nutzbar sind weiterhin energieeintragende Einrichtungen wie Schall- und Ultraschallaktoren, Verdampfungsstrecken, Infrarot- Strahlungswärmequellen oder elektromagnetische Erwärmung im RF- bzw. Mikrowellenbereich, die wirksam auf Schäume bzw. auf Schaumoberflächen einwirken und so eine schaummindernd wirkende Flüssigkeits-Gastrennung erlauben.

Die Entfernung von Schaumbildnern aus der Aminwaschflüssigkeit kann durch Aktivkohlefilter und Partikelfilter für Partikel > 5 µm unterstützt werden. Auch der Einsatz von Schauminhibitoren z.B. auf Silikonölbasis ist möglich, jedoch nicht bevorzugt.

Die Temperatur in der Verweil- und Absetzzone wird vorteilhaft auf 65 bis 95 °C gehalten. Die mittlere Verweilzeit der Aminwaschflüssigkeit in einem Flash-Desorber beträgt vorteilhaft 5 bis 60 Minuten, insbesondere 15 bis 40 Minuten.

Die Entgasung der Aminwaschflüssigkeit innerhalb der Verweil- und Absetzzone kann durch Maßnahmen zur Unterstützung der physikalischen Entgasung, z. B. durch Einsatz eines Schallfeldes von 20 Hz - 400 Hz und/oder eines Ultraschallfeldes im Bereich von 16 kHz bis 100 kHz unterstützt werden, vorteilhafterweise durch Anordnung von Schall- und/oder Ultraschallquellen im Bodenbereich der Verweil- und Absetzzone. Sich entlösende Gasblasen koagulieren und steigen in der Waschflüssigkeit auf. Bei bevorzugten 30 - 80 Hz erfolgt bereits eine gute Blasenagglomeration.

In der Verweil- und Absetzzone können vorteilhaft Leiteinrichtungen installiert sein, die zur Flüssigkeitsberuhigung beitragen, Kurzschlußströmungen unterbinden und die Verweilzeit verkürzen können.

Die desorbierte Aminwaschflüssigkeit wird in einer bevorzugten Ausführungsform aus der Verweil- und Absetzzone aus dem Kreislauf entfernt und einer weiteren Verwendung zugeführt.

Die aus der Absetzzone abgezogene desorbierte Aminwaschflüssigkeit kann mittels Wärmeübertragern zur Erwärmung der zulaufenden Rich-Waschflüssigkeit verwendet werden.

Da die thermische Entmischung einiger Aminwaschflüssigkeiten insbesondere in den Fällen einer ausgeprägten Phasenausbildung zur Bildung von Fraktionen mit unterschiedlichem Wassergehalt führen kann, für die weitere Verwendung der Aminwaschflüssigkeit jedoch zumeist ein konstanter Wassergehalt erwünscht ist, ist der Wassergehalt in der ablaufenden desorbierten Aminwaschflüssigkeit so nachzuführen, daß die Wasserbilanz des Desorptionsprozesses ausgeglichen bleibt.

Vorteilhafterweise wird der Wassergehalt der zulaufenden Rich-Waschflüssigkeit daher durch spektroskopische, titrimetrische oder andere geeignete Verfahren bestimmt und der desorbierten Aminwaschflüssigkeit soviel aus der stärker wasserhaltige Fraktion zugemischt, daß der Wassergehalt im Ablauf der desorbierten Lean-Waschflüssigkeit mit dem Wassergehalt der beladenen Rich-Waschflüssigkeit im Zulauf übereinstimmt. Von Vorteil kann an dieser Stelle auch eine Wasserzudosierung erfolgen, soweit diese ergänzend für den Erhalt der Wasserbilanz einer Gesamtanlage erforderlich sein kann. In einer bevorzugten Ausführungsform des Verfahrens für phasenbildende Aminwaschflüssigkeiten können Fraktionen mit unterschiedlicher Dichte aus der Absetzzone in unterschiedlichen Höhen entnommen werden und dann unterschiedlichen Nachfolgeeinrichtungen zugeführt oder an unterschiedlichen Positionen in den Verfahrensablauf des erfindungsgemäßen Verfahrens wieder eingebracht werden. Dabei können vorteilhaft Wärmeübertragungseinrichtungen dazwischengeschaltet werden.

Weiterhin können Fraktionen mit unterschiedlichem Beladungsgrad oder unterschiedlichem Wassergehalt aus der Absetzzone abgezogen werden, vorteilhaft in verschiedenen Höhen dieser Zone. Diese Fraktionen können applikationsspezifisch eingesetzt werden, wenn z.B. höhere Gasreinheiten erforderlich werden, wobei die Fraktion mit der relativ geringsten Restbeladung oder solche mit höherem Wasseranteil, vorteilhaft für die Feinabsorption von Sauergasströmen genutzt werden kann.

Ein grundsätzlicher positiver Effekt des Verfahrens besteht darin, daß durch die niedrigen Prozeßtemperaturen die Gefahr einer vorzeitigen Alterung der Waschmittelflüssigkeit wesentlich verringert wird und dadurch die Aminwaschmittelflüssigkeit deutlich länger im Kreislauf gefahren werden kann.

Ein weiterer Vorteil besteht darin, daß Wärmequellen mit relativ niedrigem Wärmeniveau effektiv genutzt werden können und damit eine Energieoptimierung erreicht wird. Durch die niedrigeren Prozeßtemperaturen können auch die anlagentechnischen Anforderungen abgesenkt und damit ihre Haltbarkeit und Verfügbarkeit erhöht werden. Auch fallen die Aufwendungen für den Betrieb und die Instandhaltung der Anlage geringer aus, was insgesamt einen wirtschaftlichen Vorteil ergibt.

Ein weiterer Vorteil ergibt sich aus der Nutzbarkeit eines breiten Temperaturbereichs von bevorzugt 85 - 105 °C, ohne Anpassungen in der Hardware einer erfindungsgemäßen Vorrichtung vornehmen zu müssen.

Ein weiterer Vorteil besteht darin, daß keine umfangreichen Anlagenbestandteile mit höher konzentrierten Waschmittelanteilen unnötig in Kontakt gebracht werden, wodurch Korrosionsrisiken minimiert werden können.

Speziell für den Einsatz von Gemischen von Aminwaschflüssigkeiten aus MDEA und DGA im Bereich von 1:8 bis 1:35 wird mit dem erfindungsgemäßen Verfahren die Bildung von unerwünschten DGA - Zersetzungsprodukten wie BHEEU wirksam unterdrückt.

Die Erfindung betrifft auch eine Vorrichtung zur Durchführung eines Niedertemperaturverfahrens zur Desorption aminhaltiger Waschflüssigkeiten.

Die über die Leitung 1 a herangeführte beladene Aminwaschflüssigkeit 1 (Rich-Waschflüssigkeit) wird einer Verdichtungszone 2 zugeführt und auf einen Druck von 2 bis 16 bar verdichtet. Die unter Druck stehende Flüssigkeit wird über die Leitung 2a einer Heizzone 3 zugeführt und dort mittels eines eingebrachten Heizmediums auf 40 bis 105°C erwärmt.

Die erwärmte und unter Druck stehende Flüssigkeit wird über die Leitung 3a und die Düsen 12 in einer Entspannungszone 8 zu feinen Tröpfchen zerstäubt (atomisiert) und dabei entspannt. Dabei entstehende nichtkondensierende Dampfanteile und abgestripptes CO₂ wird als Offgas 5 abgezogen. In der innerhalb des Desorbers 7 angeordneten Verweil- und Absetzzone 9 erfolgt eine Beruhigung der nachgasenden Flüssigkeit. Die mittlere Verweilzeit der umlaufenden Flüssigkeit beträgt 2 - 180 min.

Die erfindungsgemäße Vorrichtung umfaßt weiterhin Einrichtungen zur Wärmeübertragung, Pumpen, Drosselventile, Meßeinrichtungen für einen oder mehrere der Parameter CO₂, Dichte, Leitfähigkeit, Temperatur, Druck, Konzentration und pH-Wert, Behälterfülfstand, Flüssigkeitsvolumenstrom sowie übliches anlagentechnisches Zubehör.

In der Absetzzone wird teildesorbierte Aminwaschflüssigkeit (Semi-Rich-Waschflüssigkeit) wieder abgezogen und wieder der Verdichtungszone 2 zugeführt.

Aus der Verweil- und Absetzzone wird eine teildesorbierte Aminwaschflüssigkeit (Lean-Waschflüssigkeit) der Aminwaschflüssigkeit zugemischt und erneut im Absorptions-Desorptions-Zyklus der Aminwäsche verwendet.

In der Absetzzone können in einer vorteilhaften Ausführungsform der Vorrichtung Einbauten zur Verringerung horizontaler Strömungen in dem Bereich nach den Düsen angeordnet sein, z.B. vertikale Leitbleche mit oder ohne Öffnungen darin.

Beim Flashvorgang miterzeugter Schaum kann z. B. durch einen Skimmer entfernt und aus dem System ausgeschleust werden. Weitere Möglichkeiten einer aktiven Schaumniederschlagung können durch Besprühen mit Aminwaschflüssigkeit erfolgen oder durch Energieeintrag in Form von Schall, Ultraschall, Wärmestrahlung und elektromagnetischer Einstrahlung, oder durch Einsatz oberflächenaktiver Schaumhemmer wie z. B. silikonölbasierte Entschäumer.

Weiterhin kann die Vorrichtung einen Aktivkohle- und Partikelfilter im Bereich > 5 µm zur Unterstützung der Schaumreduktion durch Entfernung schäumender Substanzen und schaumfördernder Partikel enthalten.

Die Entspannung über Düsen 12 in der Flashzone kann durch einen Gasstrom unterstützt werden oder durch eine ultraschallunterstützte Ausdüsung.

Für die Nukleationsförderung besteht eine vorteilhafte technische Lösung der Vorrichtung darin, daß in der Heiz- und Nukleationszone Oberflächenrauhigkeiten und/oder rauhe Beschichtungen von 5 - 100 µm des Innenraums der Heiz- und Nukleationszone vorhanden sind.

In weiteren Variationen zur Ausführungsform einer Nukleationsförderung in der Heiz-und Verweilzone können eine oder mehrere Ultraschallquellen von 18 - 100 kHz in der Heiz- und Nukleationszone angeordnet werden.

Ebenso möglich ist der Eintrag kleiner Gasbläschen in der Heiz- und Nukleationszone, etwa durch feinblasiges Eindüsen einer Kleinstmenge von bis zu 10 ppm(wt) CO₂ zur zulaufenden, zu desorbierenden Aminwaschflüssigkeit, bzw. durch die Entspannung eines mit CO₂ begastem Prozeßwasserteilstroms in der Heiz- und Nukleationszone, so daß dies durch die Entlösung von physikalisch gelöstem CO₂ zur Bildung zusätzlicher Nukleationskeime führt.

Die Art des zuzuführenden Gases ist letztlich nur durch die zulässige Nukleationsgasfracht im CO₂ - Offgas beschränkt, sollte sich jedoch chemisch inert zur Aminwaschflüssigkeit verhalten.

Eine weitere Ausführungsform ist ein Wasserstoffbläschen enthaltender Prozeßwasserzusatz in die Heiz- und Nukleationszone, der durch Elektrolyse gewonnen wurde. Vorteilhafterweise wird der elektrolytisch mit gebildete Sauerstoff durch ein Diaphragma bzw. eine Membran abgetrennt, so daß die Waschflüssigkeit keine zusätzliche oxidative Belastung erfährt. Die Größe der Wasserstoffbläschen kann im Bereich von 1 - 1000 µm liegen.

In einer weiteren Ausführungsform der erfindungsgemäßen Vorrichtung kann beispielsweise der beschriebenen Vorrichtung, im folgenden als Niedertemperatur-Flash-Desorber bezeichnet, ein weiterer gleichartiger Flash-Desorber nachgeschaltet werden, oder zwei Flash-Desorber werden parallel zueinander betrieben, um z. B. Absorber mit unterschiedlichen Anforderungen an den Desorptionsgrad der Aminwaschflüssigkeit zu bedienen.

In einer weiteren Ausführungsform können unterschiedliche Desorptionsgrade der Waschflüssigkeit durch Parametervariation innerhalb der Verdichtungs- Heiz- und Nukleationszone und Ausdüsung erzielt werden, insbesondere durch Modifikation von Temperatur und Druck der Waschflüssigkeit innerhalb der Heiz- und Nukleationszone sowie durch die Intensitätsänderung der Entspannungsverdampfung von Waschflüssigkeitsbestandteilen in der Flashzone.

Eine weitere vorteilhafte Ausführungsform der Erfindung besteht darin, daß zusätzlich zu dem oder den Niedertemperatur-Flash-Desorbern übliche thermische Desorber nachgeschaltet werden, um deutliche höhere Desorptionsgrade zu erzielen, als dies bei den erfindungsgemäß niedrigen Desorptionstemperaturen möglich ist, vorteilhaft kombiniert mit Wärmeübertragungseinrichtungen.

Nachstehend wird die Erfindung an einem Ausführungsbeispiel auf der Basis eines Funktionsschemas einer Anlage zur Desorption von beladener Waschflüssigkeit, in der CO₂ und/oder Schwefelverbindungen gebunden sind, nochmals verdeutlicht.

In der dazugehörigen Zeichnung zeigen
- Fig. 1: Prinzipschema der erfindungsgemäßen Vorrichtung (Niedertemperatur-Flashdesorber)
- Fig. 2: Detaillierte Ausführung des Niedertemperatur-Flashdesorbers
- Fig. 3: Kopplung Niedertemperatur-Flashdesorber mit thermischer Desorptionskolonne
- Fig. 4: Beispiel Kopplung zweier parallel verschalteter Niedertemperatur-Flashdesorber

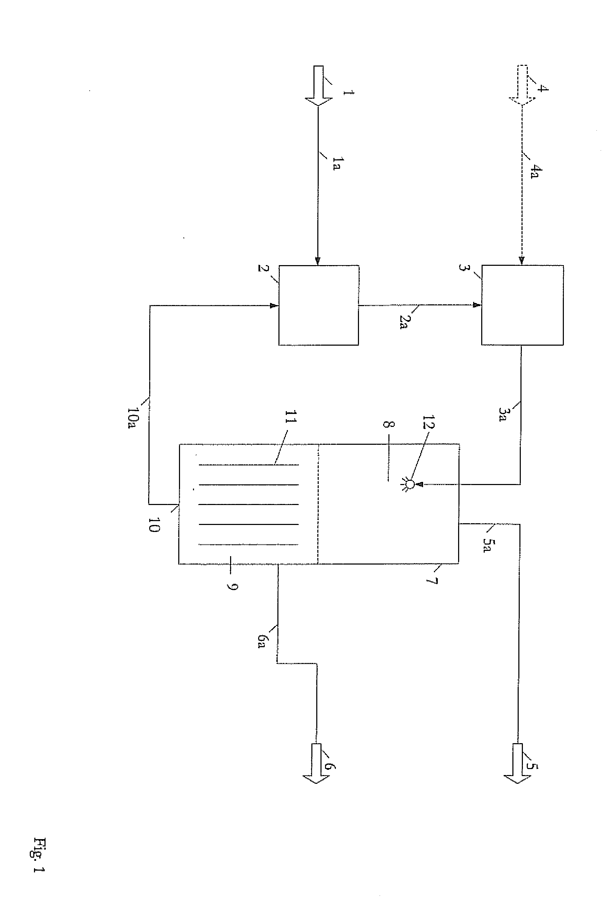

Fig.1 zeigt das Prinzipschema des erfindungsgemäßen Verfahrens. Die zugeführte Rich-Waschflüssigkeit 1 wird über eine Verdichtungszone 2 und Heizzone 3 auf eine für die Diffusionsdesorption minimal notwendige Temperatur erwärmt und in die Entspannungszone 8 unter Druckabminderung eingedüst. Bei Temperaturen unter 100°C geschieht dies unter Nutzung einer reinen Diffusionsdesorption. Bei einer Temperatur von größer 100 °C, vorzugsweise von 105 °C setzt eine Entspannungsverdampfung der beim Düsenaustritt überhitzt vorliegenden Aminwaschflüssigkeit ein, unter ggf. erfolgter Zugabe extern generierter Nukleationskeime. Die hierbei auftretende Entspannungsverdampfung von Aminwaschflüssigkeitsbestandteilen sorgt für ein zusätzliches Abstrippen von CO₂, das als Off-Gas 5 abgeführt wird, von der Aminwaschflüssigkeit. Mit Erreichen des thermodynamischen Gleichgewichtszustandes ist die Verdampfung von Waschflüssigkeitskomponenten beendet, und die Aminwaschflüssigkeit wird der Verweil- und Absetzzone 9 für ein weiteres Ausgasen zugeführt. Eine Strömungsberuhigung 11 fördert die Entgasung und reduziert unerwünschte Kurzschlußströmungen. Ein Teil der Waschflüssigkeit wird zur weiteren Beladungsminderung im Umlauf über 10a erneut der Verdichtungszone 2 zugeführt, während ein Teil der desorbierten Waschflüssigkeit über 6a zur weiteren Verwendung abgeführt wird.

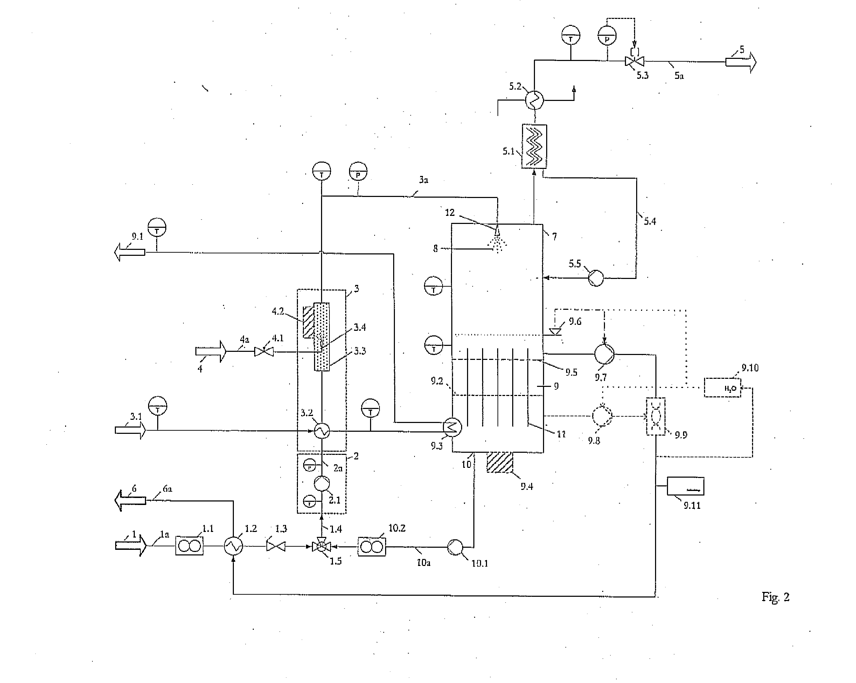

In Fig. 2 dargestellt ist eine erfindungsgemäße Vorrichtung unter Berücksichtigung der erforderlichen technischen Hilfseinrichtungen.

Die zu regenerierende Aminwaschflüssigkeit wird der ein Flowmeter 1.1. Wärmeübertrager 1.2, Rückschlagsicherung und Mischventil auf eine der Verdichtungszone 2 zugehörigen Druckpumpe 2.1 geführt und in die Heizzone 3 geleitet. Die nunmehr unter Druck stehende Aminwaschflüssigkeit wird im Wärmeübertrager 3.2 auf mit der höchsten verfügbaren Temperatur des zugeführten Wärmeträgermediums 3.1 erwärmt. Im Nukleationsbehälter 3.3 erfolgt die Zudosierung extern erzeugter Nukleationskeime über Verbindungsleitung 4a, Regulierventil 4.1 bzw. deren weitere Verstärkung am Nukleationskeimerzeuger 4.2. Die nunmehr nukleationskeimhaltige überhitzte, unter Druck stehende Aminwaschflüssigkeit wird über Zuführung 3a in die Entspannungszone 7 über Düse 12 eingedüst und erzeugt eine Sprayregion 8. Unter Ausnutzung der Entspannungsverdampfung von Waschflüssigkeitsbestandteilen abgestripptes CO₂ wird über den Koaleszenzer / Partikelabscheider 5.1 abgeführt. Ein Wärmeüberträger 5.2 kühlt den Offgasstrom unter weiterer Kondensation von Offgasbestandteilen wie z.B. Wasser. Ein Druckhalteventil 5.3 sorgt für einen definierten Druck innerhalb der Entspannungszone 8. Das Off-Gas 5 wird über Verbindungsleitung 5a abgeleitet. Entstandenes Kondensat wird über Verbindungsleitung 5.4 und Förderpumpe 5.5 zurückgeführt. Die Verweil- und Absetzzone 9 nimmt die nunmehr flüssig vorliegende Aminwaschflüssigkeit auf. Ein Wärmeübertrager 9.3 sorgt die Temperierung der Aminwaschflüssigkeit. Über Strömungsberuhigung 11 und den Absaugverteiler horizontal 9.5 wird ein desorbiertes Waschmittel abgezogen. Die Füllstandsüberwachung 9.6 sorgt mit der Förderpumpe 9.7 für einen definierten Füllstand innerhalb der Verweil- und Absetzzone 9 und sorgt so für einen definierten Durchfluß. Ein Aktor für Schallwellen 9.4 unterstützt das Ausgasen der Flüssigkeit.

Bei Phasenbildung zeigenden Aminwaschflüssigkeiten erfolgt der Abzug des desorbierten Produkts derart, daß die leichtere Fraktion über Förderpumpe 9.7 und die schwerere Fraktion der Aminwaschflüssigkeit unterhalb der Phasenarenzschicht 9.2 über die Förderpumpe 9.8 auf den Mischer 9.9 geführt wird, wobei ein Sensor Wassergehalt 9.10 die Einhaltung eines konstanten Wasserhalts im desorbierten Produkt durch Ansteuerung der Förderpumpen 9.7 und 9.8 regelt.

Ein Sensor CO₂ - Beladungsgrad 9.11 erlaubt die Überwachung des tatsächlichen Desorptionsgrades der Aminwaschfiüssigkeit. Die nunmehr desorbierte Aminwaschflüssigkeit 6 wird über den Wärmeübertrager 1.2 zur Erwärmung der zulaufenden Rich-Waschflüssigkeit 1 verwendet und verläßt den Flash-Desorber.

Der Umlauf der Aminwaschflüssigkeit zur Erzielung des gewünschten Desorptionsgrades erfolgt über den Abzug rückgeführtes Produkt 10, Förderpumpe 10.1, die zugehörige Verbindungsleitung 10a, Flowmeter 10.2. und Mischventil 1.5 auf die Verdichtungszone 2.

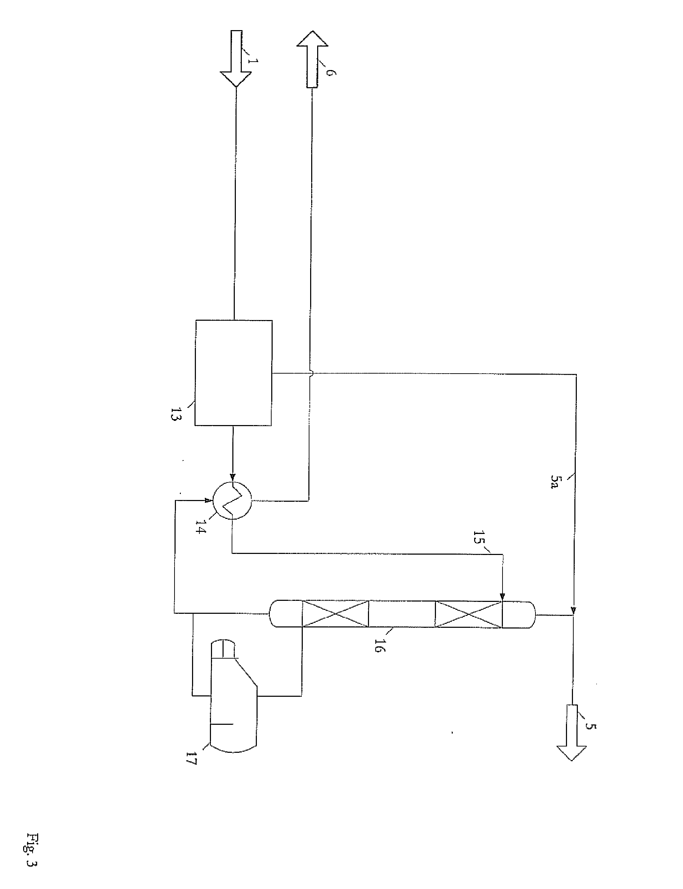

Fig. 3 zeigt die Anordnung einer konventionellen thermischen Desorbereinheit nach einem Flash-Desorber zur weiteren Absenkung der Beladung der Aminwaschflüssigkeit.

Eine Rich-Waschflüssigkeit wird im Niedertemperaturdesorber 13 unter Ableitung von CO₂ über Verbindungsleitung 5a teildesorbiert und über Wärmeübertrager 14 auf den Kopf einer thermischen Desorptionskolonne 16 geführt. Der Reboiler 17 erzeugt den zur Desorption benötigten Wasserdampfstrom. Das desorbierte CO₂ wird am Kolonnenkopf auf den Ablaß Off-Gas gelenkt, während die nunmehr weiter desorbierte Lean-Waschflüssigkeit über Wärmeübertrager 14 einer weiteren Verwendung zugeführt wird. Weitere detaillierende gerätetechnische Einrichtungen, Ventile, Instrumentierungen etc. können ergänzend eingesetzt werden.

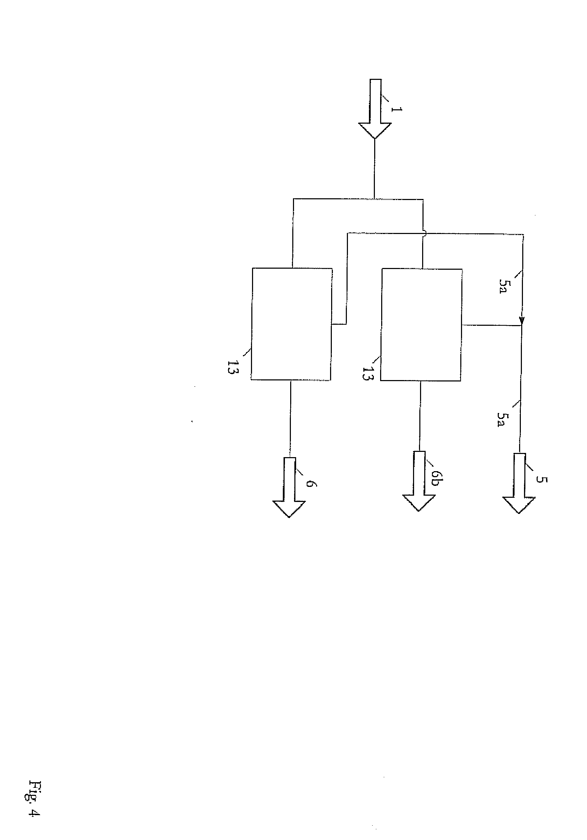

Fig. 4 zeigt einen parallelen Betrieb zweier Flash-Desorber 13 zur Desorption eines Rich-Stroms, vorzugsweise zur Realisierung unterschiedlicher verbliebener Rest-Beladungsgrade in den Lean-Teifströmen.

### Beispiel 1

Die Anlage gemäß Fig. 1 ist Bestandteil einer Biogasaufbereitungsanlage, die CO₂ und/oder Schwefelverbindungen mittels einer Aminwäsche entfernt. Um die Diglykolamin® (DGA®) und Methyldiethanolamin (MDEA) enthaltende Waschmittelflüssigkeit benutzungsfähig zu halten, ist es erforderlich, die CO₂- bzw. Schwefelverbindungs-Beladung der Aminaschflüssigkeit zu reduzieren, um eine genügend hohe Beladungsdifferenz im erneuten Umlauf der Aminwaschflüssigkeit nutzen zu können.

Ein Teil des in der Aminwaschfilüssiglfeit gelösten CO₂ und/oder der Schwefelverbindungen wird erfindungsgemäß in vorteilhafter und überraschender Weise bereits bei Temperaturen unterhalb von etwa 105°C, der bisherigen Mindesttemperatur zur effektiven DGA® / MDEA - Desorption, desorbiert.

Die beladene Rich-Waschflüssigkeit mit einer Aminkonzentration von 50 %, einer Temperatur von 60 °C und einer Beladung von 0,43 mol CO₂ je mol Amin wird über die Leitung 1a in eine Verdichtungszone 2 geführt, dort auf einen Druck von 3 bar verdichtet und anschließend in eine Heizzone 3 geleitet.

In dem nachfolgenden Desorber 7 (Fig. 1) erfolgt in der Entspannungszone 8 über die Düsen 12 die Entspannung der Aminwaschflüssigkeit auf einen Druck von 0,1 bar (Überdruck). Die Entspannung erfolgt über eine Düse unter Bildung von Tröpfchen und Flüssigkeitspartikeln, die eine effektiven, temporären Oberflächenvergrößerung um den Faktor 30 gegenüber dem Aminwaschflüssigkeitsvolumen darstellen. Die Diffusion von CO₂ erfolgt dabei langsam, so daß eine längere Verweilzeit und mehrere Umläufe der Aminwaschflüssigkeit zur Erzielung einer nutzbaren Desorption erforderlich werden.

In diesem Flashbereich können weiterhin oberflächenvergrößernde Elemente wie strukturierte Packungen, Füllkörper, Kontaktoren vorhanden sein.

CO₂, gasförmige Schwefelverbindungen und Wasserdampf werden als Offgas 5 abgeleitet.

Innerhalb einer mittleren Verweilzeit von 35 - 45 Minuten wird nachfolgend der Strippeffekt durch wiederholte Verdichtung, Erwärmung und Ausdüsung verstärkt und eine weitere Abreicherung des fixierten CO₂ und der Schwefelverbindungen aus der Aminwaschflüssigkeit bewirkt.

Nach einer erfindungsgemäßen mittleren Verweilzeit von 2-180 Minuten stellt sich eine teildesorbierte Aminwaschflüssigkeit ein, die als desorbierte Waschflüssigkeit wieder in den Absorptionsbereich (nicht gezeigt) zurückgeführt werden kann.

Bei einer eingesetzten beladenen Aminwaschflüssigkeit von 95 Gew.-% DGA und 5 Gew.-% MDEA werden nach dem erfindungsgemäßen Verfahren und folgenden Parametern

| | |
|---|---|
| Verdichtung der Aminwaschflüssigkeit: | 3 bar (Überdruck) |
| Erwärmung Heizzone: | 79-98 °C |
| Entspannung (Düse) | auf 0,1 bar (Überdruck) |
| Verweilzeit der Aminwaschflüssigkeit | 35 Minuten |

bei 6 Proben die in Tabelle 1 aufgeführten Werte ermittelt. Die Entnahme erfolgt am tiefsten Punkt der Verweil- und Absetzzone 9, danach wird die Aminwaschflüssigkeit auf 20 °C abgekühlt und vermessen. Die Temperaturmessung T1 erfolgt zur Kontrolle der Temperatur der ausgedüsten Waschflüssigkeit. Der Desorber 7 ist nicht optimiert, d. h. es erfolgt z. B. keine Thermostatierung.

**Tabelle 1**

| Dauer der Flash behandlung | T1 Behälter °C | T2 Düsen-vorwärmer °C | pH-Wert Probe | Dichte (g/cm³) | Leit-Fähigkeit mS |
|---|---|---|---|---|---|
| t_{Null} | 60 | 94 | 8,6 | 1,084 | 23,0 |
| T _{+ 6 Minuten} | 61 | 95 | 8,6 | 1,084 | 23,9 |
| T _{+ 12 Minuten} | 65 | 79 | 8,6 | 1,084 | 23,2 |
| T _{+ 18 Minuten} | 84 | 91 | 9,2 | 1,074 | 19,1 |
| T _{+ 24 Minuten} | 91 | 96 | 9,7 | 1,069 | 15,4 |
| T _{+ 30 Minuten} | 94 | 98 | 9,6 | 1,065 | 14,6 |
| T _{+ 60 Minuten} | 96 | 97 | 9,8 | 1,06 | 13,5 |

Die Werte zeigen eine zunehmende Desorption der Aminwaschflüssigkeit, obwohl zu keinem Zeitpunkt die für DGA typische Desorptionsmindesttemperatur von 105 °C erreicht wurde. Der zeitliche Verlauf von Leitfähigkeit, pH-Wert und Dichte zeigt eine variierende Desorptionsrate, aber auch eine Mindestbehandlungszeit zur Erzielung einer nennenswerten Desorption.

Vergleicht man die erzielte Dichteänderung mit einer konventionellen Desorption bei 60% Wasseranteil und 115 °C, dann beträgt die Dichteänderung Rich 1,08 g/cm³ zu Lean 1,044 g/cm³. Etwa 36,5 g CO₂ werden je Liter Aminwaschflüssigkeit desorbiert. Eine bis zur Gleichgewichtsbeladung (bei 3,5 bis 4,5 bar) voll beladene Waschflüssigkeit absorbiert ca. 69 bis 75 g CO₂ je Liter Aminwaschflüssigkeit. Bei den angegebenen Prozeßbedingungen sind damit nach 30 Minuten 52,6 % bzw. nach 60 Minuten Behandlungszeit 65,8 % des Desorptionsleistung einer konventionellen Wasserdampfdesorption erzielbar, ohne eine Hochtemperaturwärmequelle nutzen müssen.

Aus Tabelle 1 ist weiterhin ersichtlich, daß es erfindungsgemäß vorteilhaft sein kann, in Abhängigkeit von der Flashbehandlung als Kriterien für den Beladungsgrad und damit für die Desorption sowohl den pH-Wert als auch die Dichte oder die Leitfähigkeit oder mehrere davon zu nutzen. Eine direkte Bestimmung des Beladungsgrades kann ferner durch spektrometrische und titrimetrische Verfahren erfolgen.

### Beispiel 2

Es wird im Beispiel 2 wie folgt gearbeitet:
Eine in einem konventionellen Absorber mit CO₂ beladene Aminwaschflüssigkeit wird mit einem Flashdesorber bei kleiner Verweilzeit in der Verweil- und Absetzzone (9 vordesorbiert, um einen nachgeschalteten thermischen Desorber 16 kurzzeitig zu entlasten. Es werden Waschfilüssigkeitsproben gezogen und jeweils bei 21,5 °C vermessen. Die genutzte Aminwaschflüssigkeit in wäßriger Lösung besteht aus 95% DGA und 5% MDEA. Der Wasseranteil liegt bei 65,8% und wird durch Karl-Fischer-Titration mit einem Titrator Methrom KF 870 bestimmt. Die der Absorption entnommene Rich - Waschflüssigkeit weist eine Dichte von 1,0951 g/cm³, eine Leitfähigkeit von 17,6 mS und einen pH-Wert von 8,82 auf. Die Aminwaschflüssigkeit wird in der Verdichtungszone auf 7 bar (ü) verdichtet, die Temperatur in der Heizzone beträgt 103 °C, d.h. es wird unter Nutzung der Entspannungsverdampfung von Aminwaschflüssigkeitsbestandteilen gearbeitet. Die Anregung von Nukleationskeimen erfolgt durch Überströmen einer galvanotechnisch erzeugten rauen Nickel - Innenbeschichtung mit 20 µm mittlerer Strukturgröße innerhalb der Heiz- und Nukleationszone. Die Aminwaschflüssigkeit wird auf einen Druck von 1,5 bar (absolut) entspannt und für nur 2 Minuten im Umlauf gehalten. Die teildesorbierte Aminwaschflüssigkeit weist eine Dichte von 1,0880 g/cm³, eine Leitfähigkeit von 15,7 mS sowie einen pH-Wert von 9,40 auf.

Nach einer nachgeschalteten Desorption in einem thermischen Desorber bei 112 °C wird die Aminwaschflüssigkeit weiter desorbiert, die danach eine Dichte von 1,0644 g/cm³, eine Leitfähigkeit von 10,2 mS und einen pH-Wert von 10,40 aufweist.

Die Entlastung der nachgeschalteten thermischen Desorption liegt dabei bei rund 10% der insgesamten CO₂ - Fracht.

### Liste der Bezugszeichen

Fig. 1
   - 1: Aminwaschflüssigkeit (Feed Rich)
   - 1a: Verbindungsleitung
   - 2: Verdichtungszone
   - 2a: Verbindungsleitung
   - 3: Heiz- und Nukleationszone
   - 3a: Verbindungsleitung
   - 4: Feed Nukleationskeime (gasförmig, gasförmig in Trägermedium)
   - 4a: Verbindungsleitung
   - 5: Ablaß Off-Gas
   - 5a: Verbindungsleitung Abzug Off-Gas
   - 6: Desorbierte Aminwaschflüssigkeit
   - 6a: Verbindungsleitung
   - 7: Desorber
   - 8: Entspannungszone (Sprayregion)
   - 9: Verweil- und Absetzzone
   - 10: Abzug rückgeführtes Produkt, teildesorbiert
   - 10a: Verbindungsleitung
   - 11: Strömungsberuhigung
   - 12: Düse(n)
**ergänzende Bezugszeichen** **Fig. 2**
   - 1.1: Flowmeter
   - 1.2: Wärmeübertrager
   - 1.3: Rückschlagsicherung
   - 1.4: Verbindungsleitung
   - 1.5: Mischventil

   - 2.1: Druckpumpe

   - 3.1: Zuführung Wärmeträgermedium
   - 3.2: Wärmeübertrager
   - 3.3: Nukleationsbehälter
   - 3.4: Entspannungsdüse

   - 4.1: Regulierventil
   - 4.2: Nukleationskeimerzeuger (Aktor Schall/Ultraschall, Kleinstmengenverdampfer)

   - 5.1: Koaleszenzer, Partikelabscheider
   - 5.2: Wärmeübertrager
   - 5.3: Druckhalteventil
   - 5.4: Verbindungsleitung
   - 5.5: Förderpumpe

   - 9.1: Abführung Wärmeübertragermedium
   - 9.2: Phasengrenzschicht [nur bei phasenbildender Waschflüssigkeit]
   - 9.3: Wärmeübertrager
   - 9.4: Aktor Schall/Ultraschall
   - 9.5: Absaugverteiler horizontal
   - 9.6: Füllstandsüberwachung
   - 9.7: Förderpumpe [nur bei phasenbildender Waschflüssigkeit: wasserreiche Phase]
   - 9.8: Förderpumpe[nur bei phasenbildender Waschflüssigkeit: aminreiche Phase]
   - 9.9: Mischer [nur bei phasenbildender Waschflüssigkeit]
   - 9.10: Sensor Wassergehalt [nur bei phasenbildender Waschflüssigkeit]
   - 9.11: Sensor CO₂ - Beladungsgrad

   - 10.1: Förderpumpe
   - 10.2: Flowmeter
**ergänzende Bezugszeichen** **Fig. 3**
   - 13: Niedertemperatur- Flashdesorber nach Fig. 1
   - 14: Wärmeübertrager
   - 15: Verbindungsleitung Aufgabe Reich - Waschflüssigkeit
   - 16: thermische Desorptionskolonne
   - 17: Reboiler
**ergänzende Bezugszeichen** **Fig. 4**
   - 6b: Produkt Semi-Lean - Aminwaschflüssigkeit

## Patentansprüche

1. Niedertemperaturverfahren zur Desorption aminhaltiger Waschflüssigkeiten aus Gaswaschprozessen, worin CO₂ und/oder Schwefelverbindungen chemisch gebunden vorliegen,
**dadurch gekennzeichnet, daß**
a) die beladene Aminwaschflüssigkeit in einer Verdichtungszone auf 2-16 bar verdichtet wird,
b) die beladene Aminwaschflüssigkeit in einer Heiz- und Nukleationszone auf eine Temperatur im Bereich von 40°C bis 105°C erwärmt wird,
c) die unter Druck stehende, erwärmte Aminwaschflüssigkeit zur weiteren Bildung von Nukleationskeimen angeregt wird,
d) die erwärmte Aminwaschflüssigkeit in einer Flash- oder Entspannungszone auf einen Druck von 0,1 - 3 bar (absolut) entspannt wird, so daß sich ein oberflächenvergrößernder Sprühnebel unter Bildung von Tröpfchen und Flüssigkeitspartikeln ausbildet und CO₂ oder gasförmige Schwefelverbindungen zusammen mit nicht kondensierten gasförmigen Waschflüssigkeitsbestandteilen als Offgas abgezogen werden,
e) die verbliebene Aminwaschflüssigkeit in einer Verweil- und Absetzzone bei einer Temperatur von 60°C bis unterhalb ihres druckabhängigen Siedepunktes für eine mittlere Verweilzeit der Aminwaschflüssigkeit von 2 bis 180 Minuten gehalten wird, wobei die Aminwaschflüssigkeit in der Verweil- und Absetzzone einer Ausgasung unterliegt,
f) die Aminwaschflüssigkeit aus der Verweil- und Absetzzone nach dem Abziehen eines Teiles der Aminwaschflüssigkeit wieder der Verdichtungszone im Umlauf zugeführt wird.

2. Verfahren nach Anspruch 1, worin die physikalische Entgasung der Waschflüssigkeit innerhalb der Verweil- und Absetzzone durch die Einwirkung von Schall- und/oder Ultraschallwellen unterstützt wird.

3. Verfahren nach Anspruch 1 oder 2, worin die Entspannung in der Entspannungszone erfolgt, die einen Druck im Bereich von 0,1 bar (absolut) bis 3 bar (absolut) aufweist, indem die Aminwaschflüssigkeit über eine oder mehrere Düsen entspannt wird, wobei feine Tröpfchen in der Entspannungszone ausgebildet werden.

4. Verfahren nach einem der Ansprüche 1 bis 3, worin die mittlere Tröpfchengröße im Sprühnebel nach der Düse im Bereich von 10 bis 500µm liegt.

5. Verfahren nach einem der Ansprüche 1 bis 4, wobei die auszudüsende Waschflüssigkeit in einen Gasstrahl entspannt wird.

6. Verfahren nach einem der Ansprüche 1 bis 5, worin Nukleationskeime durch Schall- und/oder Ultraschallbehandlung, Einblasen eines inerten Gases oder eines leichtsiedenden inerten Additivs, Entspannung einer begasten, unter Druck stehenden Flüssigkeit in die Heiz- und Nukleationszone, oder eine kontinuierliche gepulste Teilmengenverdampfung der Aminwaschflüssigkeit in der Heiz- und Nukleationszone oder unmittelbar vor Eintritt in die Düsen gebildet werden.

7. Verfahren nach einem der Ansprüche 1 bis 6, worin mit dem Offgas der Flashzone mitgerissene Aerosole und flüssige Aminwaschflüssigkeitsteile in einer Koaleszenz-oder Schaumabtrennungszone vom Gasstrom abgetrennt und flüssige Anteile in die Aminwaschflüssigkeit zurückgeführt werden.

8. Verfahren nach einem der Ansprüche 1 bis 7, worin durch Waschflüssigkeitsbestandteile, insbesondere schaumbildende Degradationsprodukte und Verunreinigungen gebildete Schäume aus der Koaleszenz- und Schaumabtrennzone abgetrennt und nicht wieder in der Aminwaschflüssigkeit zugeführt werden.

9. Verfahren nach einem der Ansprüche 1 bis 8, worin die Verweilzeit in der Absetzzone im Bereich von 5 bis 60 Minuten beträgt, insbesondere 15 bis 40 Minuten.

10. Verfahren nach einem der Ansprüche 1 - 9, worin der Heiz- und Nukleationszone eine begaste Flüssigkeit durch eine oder mehrere Rohrleitungen zugeführt wird und die Bildung von Nukleationskeimen durch Entspannen der begasten Flüssigkeit in die Heiz- und Nukleationszone erfolgt.

11. Vorrichtung zur Durchführung des Verfahrens nach Anspruch 1, **gekennzeichnet durch**
eine Verdichtungszone (2) für eine über die Leitung (1a) zugeführte, beladene Aminwaschflüssigkeit (1);
eine der Verdichtungszone (2) nachgeordnete Heizzone (3), die mit der Leitung (2a) mit der Verdichtungszone (2) verbunden ist;
eine der Heizzone (3) nachgeordnete Entspannungszone (8), die mit der Leitung (3a) mit der Heizzone (3) verbunden ist und in der Düsen (12) zur Umwandlung der Aminwaschflüssigkeit in feine Tröpfchen angeordnet sind;
eine räumlich zusammen mit der Entspannungszone (8) oder getrennt davon angeordnete Absetzzone (9) mit wenigstens Leitungen (10a, 6a) zur Abführung von desorbierten oder teildesorbierten Aminwaschflüssigkeiten mit unterschiedlichem Beladungsgrad; und
Wärmeübertragungseinrichtungen, Drosselventile, Meßeinrichtungen für einen oder mehrere der Parameter CO₂, Dichte, Leitfähigkeit, Temperatur, Druck, Konzentration, Brechungsindex und pH-Wert.

12. Vorrichtung nach Anspruch 11, worin Nukleationskeime intern in der Heiz- und Nukleationszone (3) durch Oberflächenrauhigkeit gebildet werden.

13. Vorrichtung nach Anspruch 11 oder 12, worin die Heizzone (3) eine oder mehrere in die Waschflüssigkeit Schall- und/oder Ultraschall abgebende Einrichtungen (4.2) zur Generation von Nukfeationskeimen aus der Waschflüssigkeit selbst enthält.

14. Vorrichtung nach einem der Ansprüche 11 - 13, worin dem Flashdesorber (13) eine Einheit (16) zur weiteren thermischen Desorption der Aminwaschflüssigkeit nachgeschaltet ist, die deren Beladungsgrad weiter absenkt.

15. Vorrichtung nach einem der Ansprüche 11 bis 14, worin zwei oder mehrere parallel arbeitende Flashdesorber (13) angeordnet sind und aus einer Rich - Waschflüssigkeit mindestens zwei Lean - Teilströme (6; 6b) mit unterschiedlichem Desorptionsgrad erzeugen.
